# EUROPEAN PATENT APPLICATION

(11) **EP 3 872 158 A1**
(43) Date of publication of application: **01.09.2021**
(21) Application number: 20160167.1
(22) Date of filing: 28.02.2020
(51) Int. Cl.: C12C 5/02, C12C 7/04, A23L 2/62

(54) **APPLICATION OF PUNICALAGIN/ELLAGIC ACID TO IMPROVE OXIDATIVE AND COLLOIDAL STABILITY OF BEVERAGES (ESP. BEER)**

(71) Applicant: Technische Universität Berlin, 10623 Berlin (DE)
(72) Inventor: Mertens, Tuur, 10437 Berlin (DE); Kunz, Thomas, 10178 Berlin (DE)
(74) Representative: Engelhard, Markus

(57) **Abstract**

The present invention relates to a method for producing a beverage, preferably a fermented beverage with improved oxidative and colloidal stability. The present invention further relates to a beverage produced by a method for producing a beverage. The present invention also relates to a beverage having increased stability, preferably increased oxidative flavor stability and colloidal stability. The present invention further relates to a use of a stabilizing agent for preparing a beverage having increased stability.

## Description

### FIELD OF THE INVENTION

The present invention relates to a method for producing a beverage, preferably a fermented beverage with improved oxidative and colloidal stability. The present invention further relates to a beverage produced by a method for producing a beverage. The present invention also relates to a beverage having increased stability, preferably increased oxidative flavor stability and colloidal stability. The present invention further relates to a use of a stabilizing agent for preparing a beverage having increased stability.

### BACKGROUND OF THE INVENTION

A beer's freshness is the key to good drinkability. Compared with other beverages, beer is subject to complex reactions in the final package that can harm the product's character. Stale flavours result from the formation of unsaturated, volatile carbonyl compounds, e.g. 2-methylbutanal, 3-methylbutanal, phenylacetaldehyde, benzaldehyde, 2-furfural, hydroxymethylfurfural, and trans-2-nonenal. Among the pathways thought to be involved in the formation of such carbonyls and other aging components are the Strecker degradation of amino acids, the melanoidin-mediated oxidation of higher alcohols, the autoxidation of unsaturated fatty acids, and the aldol condensation of short-chain aldehydes. A beer deterioration mechanism was proposed in which free radicals are formed from Fenton-type reactions during aging of beer which, in turn, can initiate a series of radical reactions that are responsible for the generation of aging components by oxidative processes. Atmospheric oxygen and transition metal ions in the wort or beer matrices such as iron ions are proposed be detrimental substances for beer flavour stability, since the presence of oxygen and transition metal ions leads to the production of highly reactive oxygen species.

Beer deterioration reactions are dependent on the reactants, catalysts, pH, and temperature. Beer should therefore be stored cool and the level of oxygen should be kept as low as practically possible during production and packaging. However, even though oxygen uptake is mitigated, atmospheric oxygen may ingress through the crown cork's compound. Beer deterioration reactions can be suppressed by antioxidants which are present in the raw materials, added artificially, or generated during fermentation. Pro-oxidative substances may promote staling reactions by, for example, recycling Fe³⁺ to its lower valance state Fe²⁺, thereby making it available for an activation of oxygen and for a catalysis of radical generation by the Fenton reaction system [8]. Many attempts have been made to find a solution for inhibiting or delaying the process of beer deterioration during storage.

The fundamental approaches to solve the problem of flavor deterioration is masking stale flavors by other substances, reducing the precursors for beer staling, and minimizing the rate of oxidation. It is important to consider that all raw materials which are used for brewing, i.e. malt, hops, water, yeast, and adjuncts, may influence flavor stability and the staling potential of a resultant beer.

It has been shown that adding hops during beer production can markedly enhance the flavor stability of beer and decrease oxidation indicators during beer storage. Hops contain several antioxidative substances, whereby hop α- and β-acids contribute to the antioxidative potential to a high extend, as measurements using ESR spectroscopy showed [1, 2]. Hop α-acids and β-acids were demonstrated to have a highly positive effect on the reduction of the formation of pro-oxidative radicals, whereas iso-α-acids had a smaller effect. Hence, the isomerization of hop-α-acids to iso-α-acids was described to yield a lower antioxidant capacity. However, newer studies using a 2-deoxyribose oxidative degradation assay revealed that both hop α-and iso-α-acids are capable of suppressing radical formation by complexing iron; but are incapable of scavenging hydroxyl radicals [3]. It has been proposed that the main mechanism of hop acids acting as antioxidants is by chelating iron and by scavenging radicals [1, 2, 4-7]. However, the problem of beer staling may still occur.

A positive effect on the reduced formation of pro-oxidative acting radicals by chelating iron may be observed upon an application of gallotannins in the brewing process. Gallotannins (tannic acid) are applied in a lot of breweries worldwide as a stabilization agent, particularly to get an increased colloidal beer stability by removing haze active protein fractions [9, 10]. However, with regard to the German purity law, an addition of gallotannins during the brewing process is not allowed, and customer acceptance in Germany is low. Furthermore, gallotannins are costly and the problem of beer staling may still occur upon addition of gallotannins.

In consideration of the extra costs caused by gallotannin addition during the brewing process, the lack of consumer acceptance, and the possibility of beer staling still occurring after application of gallotannin, it is a challenge to find an efficient substance to improve the stability of a beer, such as oxidative beer stability, preferably a substance that is cost-efficient and that has high costumer acceptance. Beside the haze active polyphenol and protein fractions, the colloidal beer stability is also influenced by oxidative beer stability and specific transition ions, such as iron.

Therefore, it is an aim of the present invention to find an efficient means for increasing the stability, particularly the oxidative stability, of a beverage, such as beer. It is also an aim of the present invention to provide a means for increasing colloidal stability of a beverage, preferably a fermented beverage. The invention further aims at providing a means for chelating transition metals in a beverage, preferably in a beer, wherein said means is safe for foodstuff. Furthermore, it is an aim of the present invention to provide a beverage that can be stored for at least several months without deterioration of the taste and/or flavor. It is also an aim of the present invention to provide a method for producing a beverage having increased oxidative and/or colloidal stability.

### SUMMARY OF THE INVENTION

In the following, the elements of the invention will be described. These elements are listed with specific embodiments, however, it should be understood that they may be combined in any manner and in any number to create additional embodiments. The variously described examples and preferred embodiments should not be construed to limit the present invention to only the explicitly described embodiments. This description should be understood to support and encompass embodiments which combine two or more of the explicitly described embodiments or which combine the one or more of the explicitly described embodiments with any number of the disclosed and/or preferred elements. Furthermore, any permutations and combinations of all described elements in this application should be considered disclosed by the description of the present application unless the context indicates otherwise.

In a first aspect, the present invention relates to a method for producing a beverage, preferably a fermented beverage with improved oxidative and colloidal stability, comprising the following steps:
(i) providing a sugar-containing raw material,
(ii) mashing the sugar-containing raw material to obtain a wort,
(iii) lautering and boiling of the wort,
(iv) optionally, whirlpool rest of the wort,
(v) fermenting the wort by using a yeast,
(vi) obtaining a beverage,
(vii) optionally, maturation of the beverage,
(viii) optionally, filtration of the beverage,
wherein said method further comprises adding a stabilizing agent before, during, or after any of steps (ii), (iii), (iv), (v), (vi), (vii), and/or (viii), wherein said stabilizing agent comprises and/or consists of ellagic acid.

In one embodiment, said sugar-containing raw material is any of malt, barley, maize, rice, wheat, oat, rye, sorghum, triticale, fonio, and millet, preferably is malt.

In one embodiment, said stabilizing agent is any of a natural extract comprising ellagitannin and/or ellagic acid, such as pomegranate extract, an ellagitannin, such as punicalagin, a hydrolysis product thereof, ellagic acid, and/or combinations thereof.

In one embodiment, said stabilizing agent is added in step (ii) before, during, or after mashing, preferably is added before or during onset of mashing.

In one embodiment, said stabilizing agent is added in step (iii) before, during, or after said boiling of the wort, preferably is added before or during said boiling of the wort, and/or
said stabilizing agent is added in step (iv) before, during, or after said whirlpool rest, preferably is added before or during said whirlpool rest, and/or
said stabilizing agent is added in step (v) before or during fermentation, preferably is added before fermentation, and/or
said stabilizing agent is added in step (vii) before, during, or after maturation, preferably is added before maturation, and/or
said stabilizing agent is added in step (viii) before or during filtration.

In one embodiment, said stabilizing agent is added more than once in any of steps (ii)-(viii) and/or is added in more than one of steps (ii)-(viii).

In one embodiment, said stabilizing agent is added in the form of a solid, such as in the form of a powder, pressed powder, capsule, pill, granules, or tablet, and/or is in the form of a liquid, such as in the form of a suspension, emulsion, or solution.

In one embodiment, said stabilizing agent is added at a concentration in the range of from 0.01 to 250 mg/L, preferably in the range of from 0.01 to 100 mg/L.

In one embodiment, said natural extract comprises punicalagin, and/or wherein said ellagitannin is punicalagin.

In one embodiment, said stabilizing agent has an ellagic acid content of at least 10 wt%, preferably at least 40 wt%, more preferably at least 90 wt%.

In one embodiment, said stabilizing agent is a natural extract having a purity of ellagitannin and/or ellagic acid of at least 40 %, preferably at least 90 %, and/or
said stabilizing agent is ellagitannin having a purity of at least 40 %, preferably at least 90 %, and/or
said stabilizing agent is one or several hydrolysis products obtained from ellagitannin having a purity of at least 40 %, preferably at least 90 %, and/or
said stabilizing agent is ellagic acid having a purity of at least 40 %, preferably at least 90%.

In one embodiment, said malt comprises Pilsner malt, Munich malt, and/or an other special malt type, such as a color malt, a flavor malt, a caramel malt, a roast malt, and a melanoidine malt.

In one embodiment, said stabilizing agent binds to, preferably chelates, a pro-oxidative acting transition metal in said wort and/or beverage.

In one embodiment, said pro-oxidative acting transition metal is any of iron, manganese, and copper, preferably is iron.

In one embodiment, said stabilizing agent reduces a radical intensity in said wort, as measured by electron spin resonance spectroscopy and/or chemiluminescence.

In a further aspect, the present invention relates to a beverage produced by a method as defined in any of the embodiments above or below, wherein said beverage is preferably a fermented beverage, such as a beer, a beer-based beverage, and/or a wine.

In a further aspect, the present invention relates to a beverage having increased stability, preferably increased oxidative flavor stability and colloidal stability, wherein said beverage comprises any of a natural extract comprising ellagitannin and/or ellagic acid, such as pomegranate extract, an ellagitannin, such as punicalagin, a hydrolysis product thereof, ellagic acid, and/or combinations thereof, wherein said beverage is preferably a beer.

Said natural extract, said ellagitannin, said ellagic acid, said pomegranate extract, said punicalagin, and said beer are as defined above.

In a further aspect, the present invention relates to a beverage having increased stability, preferably increased oxidative flavor stability and colloidal stability, wherein said beverage comprises a stabilizing agent comprising and/or consisting of ellagic acid.

Said stabilizing agent and said ellagic acid are as defined above.

In a further aspect, the present invention relates to a use of a stabilizing agent for preparing a beverage having increased stability, preferably increased oxidative flavor stability and colloidal stability, wherein said stabilizing agent is any of a natural extract comprising ellagitannin and/or ellagic acid, such as pomegranate extract, an ellagitannin, such as punicalagin, a hydrolysis product thereof, ellagic acid, and/or combinations thereof, wherein said beverage is preferably a beer.

Said natural extract, said ellagitannin, said ellagic acid, said pomegranate extract, said punicalagin, and said beer are as defined above.

In a further aspect, the present invention relates to a use of a stabilizing agent for preparing a beverage having increased stability, preferably increased oxidative flavor stability and colloidal stability, wherein said stabilizing agent comprises and/or consists of ellagic acid.

### DETAILED DESCRIPTION

The present invention aims at providing an efficient brewing process for obtaining beverages with increased stability, namely by chelating pro-oxidative transition metals, preferably iron, in the wort and/or beverage, preferably beer. Particularly, a stabilizing agent, such as a punicalagin is added to the brewing process to prolong beer freshness. Punicalagin is a watersoluble polyphenol, particularly an ellagitannin, that is hydrolysable into smaller phenolic compounds, such as ellagic acid. In one embodiment, an ellagitannin, such as a punicalagin, and/or an hydrolysis product thereof, such as ellagic acid, binds to a pro-oxidative acting transition metal, such as iron, which is a key player in the beer staling mechanism. In one embodiment, by chelating the pro-oxidative transition metals, preferably iron, in the wort and/or beverage using a stabilizing agent comprising ellagic acid, beer staling is effectively inhibited and the stability of the wort/beverage is increased. In one embodiment, a natural extract, preferably pomegranate extract, comprises ellagitannin and/or ellagic acid, and effectively chelates iron in a wort and/or beverage. In one embodiment, ellagitannins from pomegranate, such as punicalagins, effectively chelate pro-oxidative transition metals, preferably iron, in a mashing liquor, for example at a concentration of about 0,01 - 250 mg/L, preferably 0,01 - 100 mg/L, such as at about 50 mg/L. In one embodiment, ellagitannins, such as punicalagins, have an effect on the stability of a wort and/or beverage by chelating transition metal ions and/or by quenching radicals during brewing and storage. In one embodiment, ellagitannins and/or ellagic acid have an efficient antioxidative effect in a wort and/or beverage. In one embodiment, the antioxidative effect of an ellagitannin is evoked by the ellagic acid comprised by said ellagitannin.

In one embodiment, a stabilizing agent used in the present invention derives from a natural origin, i.e. is a natural extract and/or is a composition comprising or consisting of ellagitannin and/or ellagic acid obtained from a natural product, and thus said stabilizing agent has a high consumer acceptance. In one embodiment, the stabilizing agent has a high costumer acceptance since it is derived from pomegranate fruit extract and/or pomegranate juice. In one embodiment, the stabilizing agent used according to the present invention has a higher consumer acceptance than currently available products, such as tannic acid which is found in oak bark, leaves, and oak galls, since the stabilizing agent used in the present invention is derived from an edible fruit.

The term "beverage", as used herein, relates to a liquid intended for human consumption. In one embodiment, the beverage is a fermented beverage which refers to a beverage produced by a method comprising a step of fermentation, such as a beer, a beer-based beverage, a kombucha, a kwass, and/or a wine. A beer-based beverage is a beverage that comprises beer and/or is derived from beer, such as a beer mix beverage, e.g. shandy. In one embodiment, a beverage produced by a method of the present invention is preferably a beer.

The term "stability", as used herein, relates to a stability of a beverage, such as beer, including microbiological stability, resistance against haze formation, flavor stability, and foam stability. In one embodiment, stability of a beverage such as beer preferably relates to oxidative flavor stability and/or colloidal stability. Oxidative flavor stability refers to the stability against beer oxidation and/or beer staling. Beer oxidation may result in beer staling. Colloidal stability relates to the resistance against haze formation.

The term "sugar-containing raw material", as used herein, relates to a raw material used in mashing for obtaining a wort, wherein said raw material comprises sugars. The fermentation in a subsequent step of producing a beverage is based on the sugars comprised in the raw material. In one embodiment, said sugar-containing raw material comprises any of malt, barley, maize, rice, wheat, oat, rye, sorghum, triticale, fonio, millet, grapes, bread, sugar-containing tea, and combinations thereof, preferably comprises any of malt, barley, maize, rice, wheat, oat, rye, sorghum, triticale, fonio, millet, and combinations thereof, more preferably comprises at least malt. In one embodiment, the sugar-containing raw material is in the form of malt and/or unmalted grains such as barley, maize, and wheat. In one embodiment, said malt is a special malt such as colour malt, flavor malt, Munich malt, caramel malt, roast malt, melanoidine malt, Pilsner malt, or a combination thereof. In one embodiment, when the beverage to be produced is wine, the sugar-containing raw material comprises grapes. In one embodiment, when the beverage to be produced is kwass, the sugar-containing raw material comprises bread. In one embodiment, when the beverage to be produced is kombucha, the sugar-containing raw material comprises sugar-containing tea. In one embodiment, when the beverage to be produced is beer, the sugar-containing raw material comprises any of malt, barley, maize, rice, wheat, oat, rye, sorghum, triticale, fonio, millet, and combinations thereof, preferably comprises at least malt.

The term "mashing the sugar-containing raw material", as used herein, relates to a process of combining a sugar-containing raw material, such as a mix of grains, e.g. malted barley and optionally supplementary grains such as corn, sorghum, rye, or wheat, or other sugar-containing raw materials, such as grapes, bread, sugar-containing tea, with a liquid such as water and then heating the mixture to obtain a wort. In one embodiment, mashing comprises processing a sugar-containing raw material, such as malt, in a mashing liquor to obtain a wort. In one embodiment, a mashing liquor is obtained using any sugar-containing raw material, such as any of malt, barley, maize, rice, wheat, oat, rye, sorghum, triticale, fonio, millet, grapes, bread, sugar-containing tea, and combinations thereof. In one embodiment, mashing is performed for about 30 min to 2 h, preferably for about 1 hour. In one embodiment, a stabilizing agent is added to a mashing liquor prior to heating of said mashing liquor in a mashing process, or is added at the beginning of mashing, preferably when the mash reaches a first temperature step of about 63 °C. In one embodiment, mashing comprises a first temperature step at about 63 °C for about 30 min, a second temperature step at about 72 °C for about 15 min, a third temperature step at about 78 °C for about 1 min, wherein, preferably, there is a temperature rise of about 1 °C/min between the temperature steps. In one embodiment, said mashing liquor comprises water, and optionally further components such as a salt or a chelator. In one embodiment, a mashing liquor is a liquid processed in step (ii), such as before, during, or after step (ii). In one embodiment, when the beverage to be produced is wine, the mashing liquor is obtained from grapes. In one embodiment, when the beverage to be produced is kwass, the mashing liquor is obtained from bread. In one embodiment, when the beverage to be produced is kombucha, the mashing liquor is obtained from sugar-containing tea. In one embodiment, when the beverage to be produced is beer, the mashing liquor is obtained from any of malt, barley, maize, rice, wheat, oat, rye, sorghum, triticale, fonio, millet, and combinations thereof, preferably comprising at least malt.

In one embodiment,
in step (ii), said mashing is performed at a temperature of from about 63 °C to about 78 °C for a period of from 30 min to 2 hours, preferably comprising a first temperature step at about 63 °C, a second temperature step at about 72 °C, and a third temperature step at about 78 °C, and/or
in step (iii), said boiling is performed at a temperature of about 100 °C for a period of about 1 hour, and/or
in step (iv), said fermenting is performed at a temperature of from 6 to 30 °C for a period of from 1 day to 20 days.

The term "lautering and boiling", as used herein, relates to a process step in which the mash is separated into the clear liquid wort and the residual grain (mash filtration), and to a process of boiling the mash and/or wort, respectively. In one embodiment, lautering is performed prior to boiling. In one embodiment, lautering a wort results in "lautered wort". In an alternative embodiment, boiling is performed prior to lautering. In one embodiment, lautering is performed for about 10 min to about 4 hours, preferably for about 2 hours. In one embodiment, boiling is performed for about 1 min to about 2 hours, preferably for about 1 hour. In one embodiment, boiling is performed at at least 100 °C. In one embodiment, a wort is boiled to obtain a "boiled wort". In one embodiment, a temperature during lautering is between the mashing-out temperature, such as about 78 °C, and the start of boiling, such as about 100 °C.

For the fermentation, different yeast strains can be applied to achieve various flavors of the beverage. Fermentation is performed for at least one day, preferably several days, and depends on the fermentation temperature and the yeast strain. In one embodiment, fermentation is a cold fermentation, for example at about 10-12 °C, or a fermentation at room temperature, or a fermentation at a temperature above or below room temperature. In one embodiment, the term "young beer" relates to pitching wort which has been brought into initial contact with yeast for fermentation, for example at the beginning of step (v). In one embodiment, when alcohol is being produced during fermentation, for example in step (v), young beer is converted to beer.

The term "whirlpool rest", as used herein, relates to a step in which hot trub, for example proteins and/or hops, is separated from the wort. In one embodiment, a whirlpool rest is a process step after wort boiling to separate the formed hot break from wort matrix. In one embodiment, a whirlpool rest is performed after boiling of the wort. In one embodiment, whirlpool resting comprises clarification. In one embodiment, a whirlpool rest allows to get a good fermentation performance. In one embodiment, trub can be removed by alternative steps such as decanting and/or filtration. In one embodiment, whirlpooling/clarification is performed to obtain "whirlpooled wort"/"clarified wort".

The term "maturation of the beverage", as used herein, relates to any transformation of a wort and/or beverage between the end of fermentation and the preparation of a beverage for packaging, such as removing unwanted flavors. In one embodiment, maturation comprises adding a stabilizing agent to said beverage. In one embodiment, maturation comprises removing unwanted flavor compounds such as diacetyls while other wanted flavors are being formed. In one embodiment, maturation may comprise sedimentation, i.e. an extra beverage clarification.

The term "stabilizing agent", as used herein, relates to any agent that increases the stability of a beverage, such as beer, preferably an agent that increases oxidative flavor stability and/or colloidal stability. In one embodiment, a stabilizing agent relates to any of a natural extract comprising ellagitannin and/or ellagic acid, such as pomegranate extract, an ellagitannin, such as punicalagin, a hydrolysis product thereof, ellagic acid, and/or combinations thereof. In one embodiment, said natural extract comprises punicalagin. In one embodiment, said ellagitannin is punicalagin. In one embodiment, said stabilizing agent is hydrolyzed when present in said wort and/or beverage, and thus releases ellagic acid. In one embodiment, said stabilizing agent has an ellagic acid content of at least 10 wt%, preferably at least 40 wt%, more preferably at least 90 wt%. In one embodiment, said stabilizing agent is a natural extract having a purity of ellagitannin and/or ellagic acid of at least 40 %, preferably at least 90 %, and/or said stabilizing agent is ellagitannin having a purity of at least 40 %, preferably at least 90 %, and/or said stabilizing agent is one or several hydrolysis products obtained from ellagitannin having a purity of at least 40 %, preferably at least 90 %, and/or said stabilizing agent is ellagic acid having a purity of at least 40 %, preferably at least 90 %. In one embodiment, when referring to percentages with regard to a stabilizing agent, the terms "content" and "purity" are used interchangeably. In one embodiment, when referring to the "purity" of an extract, such as a pomegranate extract having an ellagic acid "purity" of 90%, the purity refers to the ellagic acid content within the extract. In one embodiment, said stabilizing agent binds to, preferably chelates, a pro-oxidative acting transition metal, preferably iron, in said wort and/or beverage, and thereby increases the stability of said wort and/or beverage, particularly the oxidative flavor stability and/or colloidal stability. In one embodiment, said stabilizing agent increases the stability of a wort and/or beverage by reducing radical intensity and/or by chelating a pro-oxidative transition metal, preferably iron. In one embodiment, said stabilizing agent is added at a concentration to provide an ellagic acid concentration, directly or indirectly via hydrolysis, in the range of from 0.01 to 250 mg/L, preferably in the range of from 0.01 to 100 mg/L, in a mashing liquor, in a wort, and/or in a beverage. In one embodiment, when referring to "ellagic acid" being added as a stabilizing agent, the ellagic acid may be in the form of pomegranate extract, such as pomegranate extract having a purity of at least 40 %, preferably of at least 90 %. In one embodiment, ellagic acid is the active compound within pomegranate extract, i.e. a compound having a stabilizing effect. In one embodiment, a stabilizing agent used in (a method of) the present invention is any of a natural extract comprising ellagitannin and/or ellagic acid, such as pomegranate extract, an ellagitannin, such as punicalagin, a hydrolysis product thereof, and ellagic acid, wherein each of said natural extract, said ellagitannin, said pomegranate extract, said punicalagin, said hydrolysis product, said ellagic acid comprises and/or consists of ellagic acid.

In one embodiment, said radical intensity is measured by electron spin resonance spectroscopy and/or chemiluminescence, preferably by electron spin resonance. In one embodiment, a *T*₆₀₀-value is defined as an ESR signal intensity measured after 600 min of reaction time at a forced aging temperature of 60°C and estimates the amount of radicals that are generated [11].

The term "ellagic acid", as used herein, relates to a natural phenol antioxidant found in numerous fruits and vegetables. Ellagic acid is the dilactone of hexahydroxydiphenic acid. Plants produce ellagic acid from hydrolysis of tannins such as ellagitannin. Ellagic acid may be extracted from, for example, walnuts, pecans, cranberries, raspberries, strawberries, grapes, peaches, and pomegranates. The term "ellagitannin", as used herein, refers to a diverse class of hydrolyzable tannins, a type of polyphenol formed primarily from the oxidative linkage of galloyl groups in 1,2,3,4,6-pentagalloyl glucose. Ellagitannins differ from gallotannins, in at least that their galloyl groups are linked through C-C bonds, whereas the galloyl groups in gallotannins are linked by depside bonds. Ellagitannins comprise hexahydroxydiphenoyl units. Hexahydroxydiphenic acid, which is created upon hydrolysis an ellagitannin, spontaneously lactonizes to ellagic acid.

In one embodiment, ellagic acid chelates pro-oxidative transition metals, such as iron. In one embodiment, a concentration of a stabilizing agent in the range of from 0.01 to 250 mg/L, for example of about 60 mg/L, is highly efficient with regard to the ratio of the amount of stabilizing agent used to the chelating effect elicited. In one embodiment, in addition to chelating iron, ellagic acid has a positive impact on haze, and thus increases colloidal stability. A stabilizing agent used in a method of the present invention effectively chelates iron both in worts having a higher transition metal content and in worts having a lower transition metal content, for example in a 100 % Munich wort having an iron concentration of around 300 µg/L and a 100% Pilsner wort having an iron concentration of 180 µg/L. In one embodiment, a stabilizing agent decreases the transition metal content, preferably iron content, by at least 250 %.

The term "adding a stabilizing agent", as used herein, relates to an addition of a stabilizing agent in a method of producing a beverage. In one embodiment, a stabilizing agent is added to any step of the method of producing a beverage, optionally more than once in said method, and/or more than once in any step of said method. In one embodiment, said stabilizing agent is added at least once in at least one step of said method in any form that is suitable, such as in the form of a solid, e.g. as a powder, pressed powder, capsule, pill, granules, or tablet, and/or in the form of a liquid, e.g. as a juice, a suspension, emulsion, or solution. In one embodiment, said liquid is obtained from dissolving and/or suspending a stabilizing agent. In one embodiment, said stabilizing agent is added at a concentration in the range of from 0.01 to 250 mg/L, preferably in the range of from 0.01 to 100 mg/L. In one embodiment, a method for producing a beverage, preferably a fermented beverage with improved oxidative and colloidal stability, comprises the following steps:
(i) providing a sugar-containing raw material,
(ii) mashing the sugar-containing raw material to obtain a wort,
(iii) lautering and boiling of the wort,
(iv) optionally, whirlpool rest of the wort,
(v) fermenting the wort by using a yeast,
(vi) obtaining a beverage,
(vii) optionally, maturation of the beverage,
(viii) optionally, filtration of the beverage,
wherein said method further comprises adding a stabilizing agent before, during, or after any of steps (ii), (iii), (v), and/or (vi), optionally any of steps (ii), (iii), (iv), (v), (vi), (vii), and/or (viii), wherein said stabilizing agent comprises and/or consists of ellagic acid.

The term "malt", as used herein, relates to germinated cereal grain, such as barley, that has been dried in a malting process. In one embodiment, malt relates to malted grains of any cereal. In one embodiment, malt comprises a mixture of several types of malt, for example Pilsner malt, Munich malt, and other special malt types, such as a color malt, a flavor malt, caramel malt, roast malt, and a melanoidine malt. In one embodiment, when adding 35 mg/L of ellagic acid to a mash, such as a 100% Pilsner mash or 100% Munich mash, the iron concentration decreases by at least 250%. In one embodiment, the concentration of the stabilizing agent used depends on the amount of malt used in a mash and/or the type of malt. For example, the higher the amount of malt used in the mash, the higher the stabilizing concentration. Roasted malts which are, for example, used for dark beers, release high amounts of transition metal ions, and thus a higher concentration of stabilizing agent is needed than for other malts. In one embodiment, higher amounts of stabilizing agent need to be added to a method using special malt types such as roast malt and caramel malt, since special malt types such as roast malt and caramel malt have a significantly higher iron entry caused by the roasting process, such as up to 700 % higher iron entry than Pilsner malt types. In one embodiment, the term "iron entry" may relate to "iron release" into the mashing liquor, wort, and/or beverage.

In one embodiment, the terms "ppm" and "mg/L" are used interchangeably. In one embodiment, the term "comprising" may relate to the term "consisting of'. In one embodiment, when referring to steps of a method of the present invention, the steps may be performed in any order. In one embodiment, steps (i)-(vi), optionally steps (i)-(viii) of a method of the present invention may be performed in any order.

### BRIEF DESCRIPTION OF THE FIGURES

The present invention is now further described by reference to the following figures.

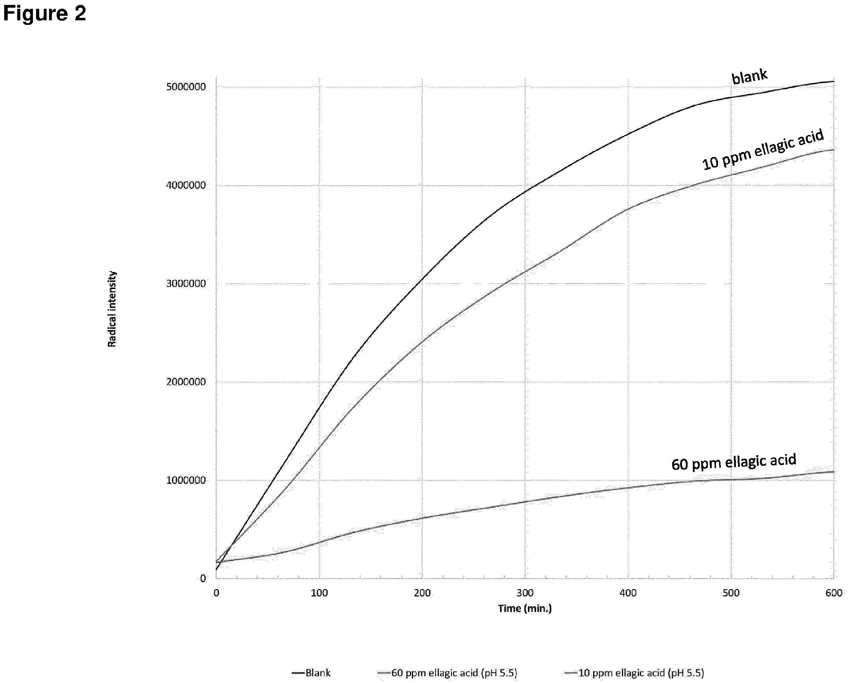

All methods mentioned in the figure descriptions below were carried out as described in detail in the examples.

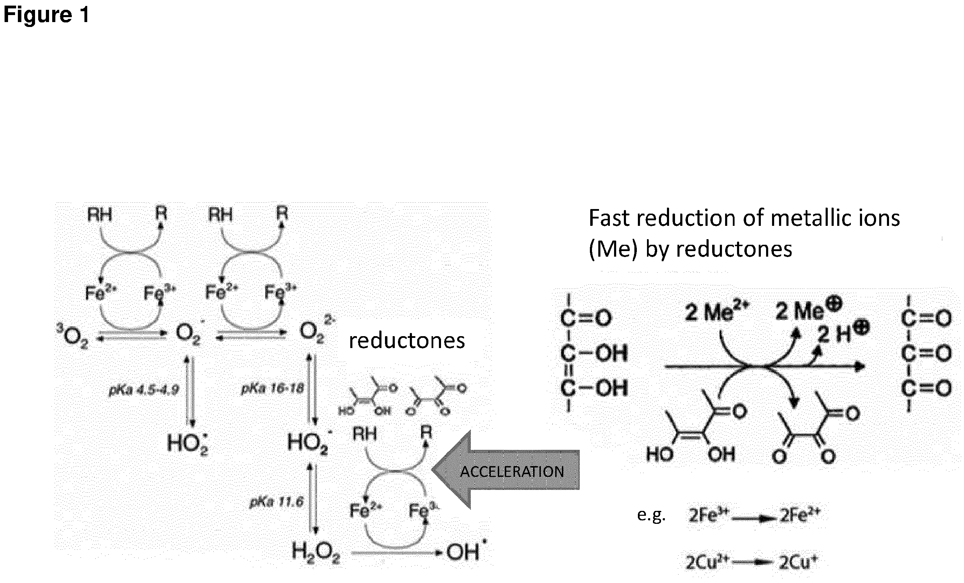

**Figure 1** shows a proposed mechanism for the accelerated oxygen activation and generation of reactive hydroxyl radicals by Fenton reaction system based on the strong reducing potential of reductones toward oxidized metal ions and consideration of well-known basic mechanisms [8]. In one embodiment, a stabilizing agent used in a method of the present invention chelates transition metals such as iron, and thereby increases oxidative stability of a beverage.
**Figure 2** shows the results of an electron spin resonance (ESR) spectroscopy for assessing the antioxidant capacity of wort.
   ESR results including the T₆₀₀-value [11] for boiled worts without an addition of ellagic acid (0 mg/L, blank, black line) and with an addition of ellagic acid (10 mg/L, low concentration, brown line; 60 mg/L, high concentration, red line) are shown. The T₆₀₀-value indicates the radical intensity reached after 600 min. The lower the ESR-signal-intensity (T₆₀₀-value), the lower the quantitative amount of prooxidative acting radicals are generated during heating (boiling), which indicates that the respective wort/beer has a greater oxidative flavor stability. As can be seen in Figure 2, the addition of punicalagin, which is 90% pure in ellagic acid, reduces the overall intensity. The effect achieved by an addition of a high concentration of ellagic acid (60 mg/L) is stronger than the effect achieved by an addition of a low concentration of ellagic acid (10 mg/L). The effect achieved upon addition of a low concentration of ellagic acid was stronger than the blank in which no ellagic acid was added.

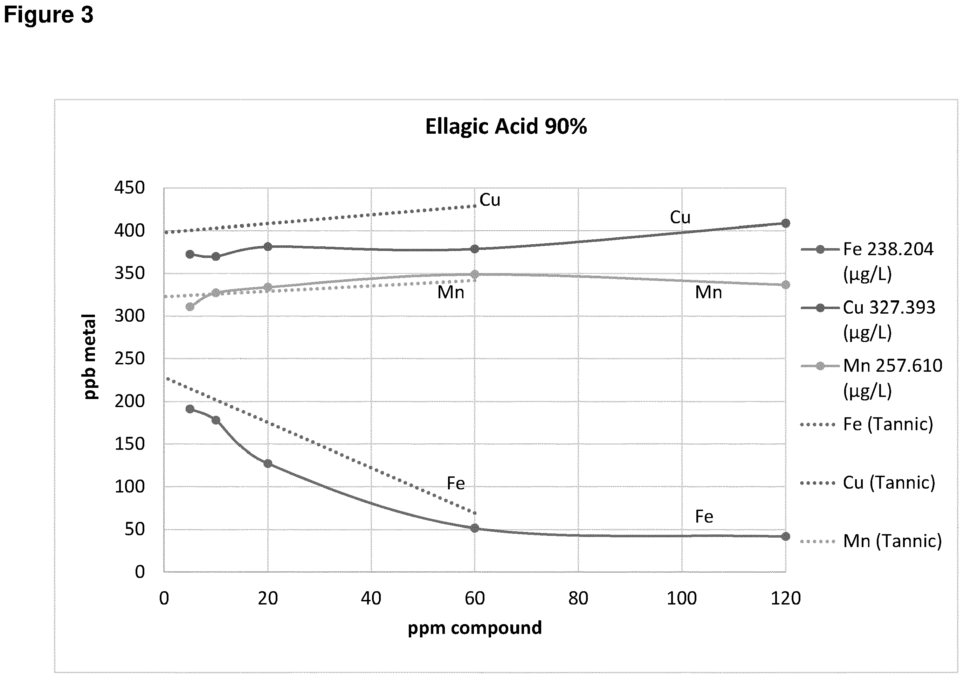

**Figure 3** shows the effect of ellagic acid on the metal content of unboiled wort.
   The results show that ellagic acid, having a concentration in the range of from 0 mg/L to 120 mg/L, influences the metal content of unboiled wort during mashing, as measured by inductively coupled plasma optical emission spectrometry (ICP-OES). ICP-OES results of unboiled worts are depicted which indicate the metal contents (Fe, Cu, and Mn) observed for increasing ellagic acid concentration (full line: ellagic acid; dotted line: tannic acid). Manganese and copper are neither significantly influenced by increasing concentrations of ellagic acid, nor by increasing concentrations of tannic acid/gallotannins (as indicated by the dotted lines). Iron, however, is significantly bound, i.e. ellagic acid effectively chelates iron. Furthermore, ellagic acid chelates iron more efficiently than tannic acid/gallotannins (as indicated by the dotted line). The comparison between ellagic acid (*solid lines*) and tannic acid (*dotted lines*) with regard to metal depletion shows that the content of iron in the wort, such as a wort comprising 50% Pilsner malt (pale malt) and 50% Munich malt (slightly more roasted), effectively decreases upon addition of 90 % pure ellagic acid, and that the iron decreasing effect of ellagic acid is higher than of tannic acid.

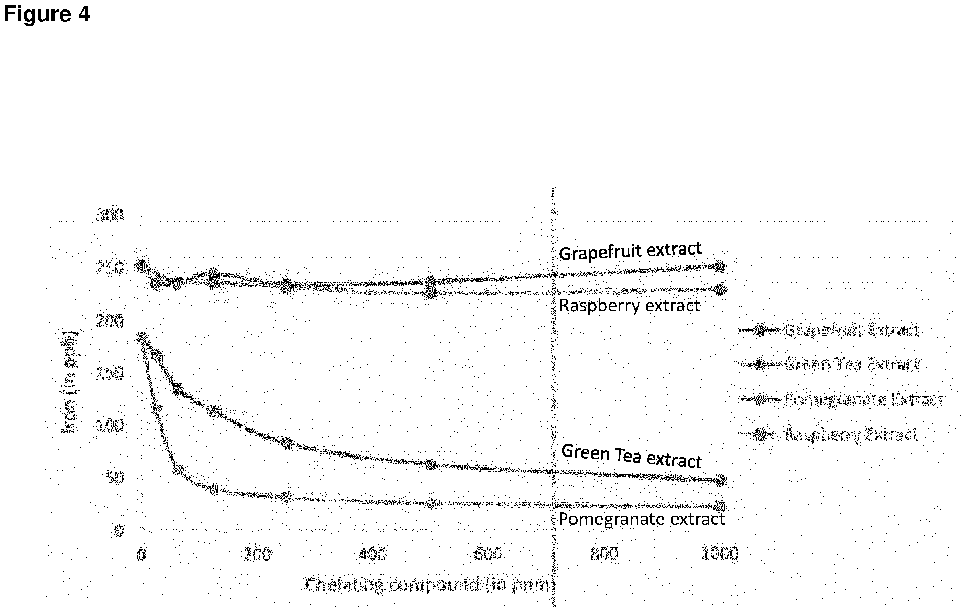

**Figure 4** shows the effect of adding food extracts during mashing on the iron content of wort.
   The figure shows ICP-OES results of the iron content of unboiled worts upon addition of increasing chelating compound concentrations (grapefruit in green, green tea in purple, pomegranate - ellagic acid (40%) in blue, raspberry in red). A comparison between four different chelating compounds is made. Most of the investigated extracts did not have a significant effect on the iron levels, similar to what is seen with grapefruit and raspberry extract. However, pomegranate extract, which has an ellagic acid purity of 40 % (i.e. content of ellagic acid of 40 wt%), effectively decreases the iron content in wort. Green tea extract also decreases the iron content in wort, but shows a lower effectiveness in decreasing the iron content compared to pomegranate.

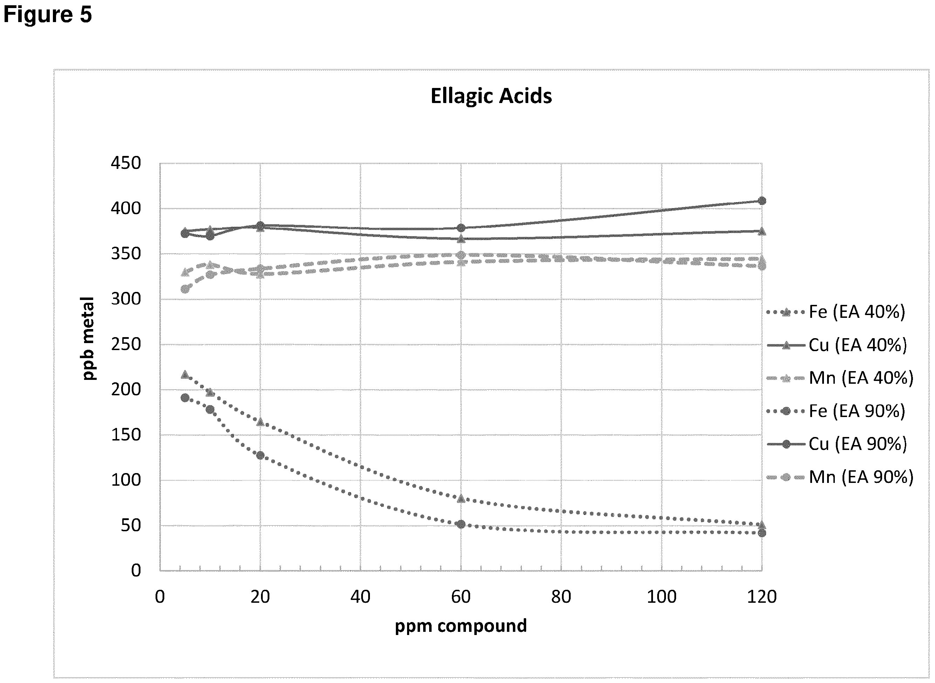

**Figure 5** shows a comparison between two ellagic acid purities and between different concentrations of ellagic acid.
   Iron concentrations (*blue dotted line*) in the wort are decreased after addition of various concentrations of ellagic acid (of two purities: 40 % and 90%, for example a natural extract comprising a content of 40 wt% and 90 wt% ellagic acid, respectively). The levels of copper and manganese (*red unbroken line* and *green dashed line, respectively*) do not significantly change after addition of ellagic acid.
   Ellagic acid having a purity of 90 % has a stronger effect than ellagic acid having a purity of 40 %. At about 60 mg/L of ellagic acid, a plateau is reached with regard to the effect of decreasing the iron level.

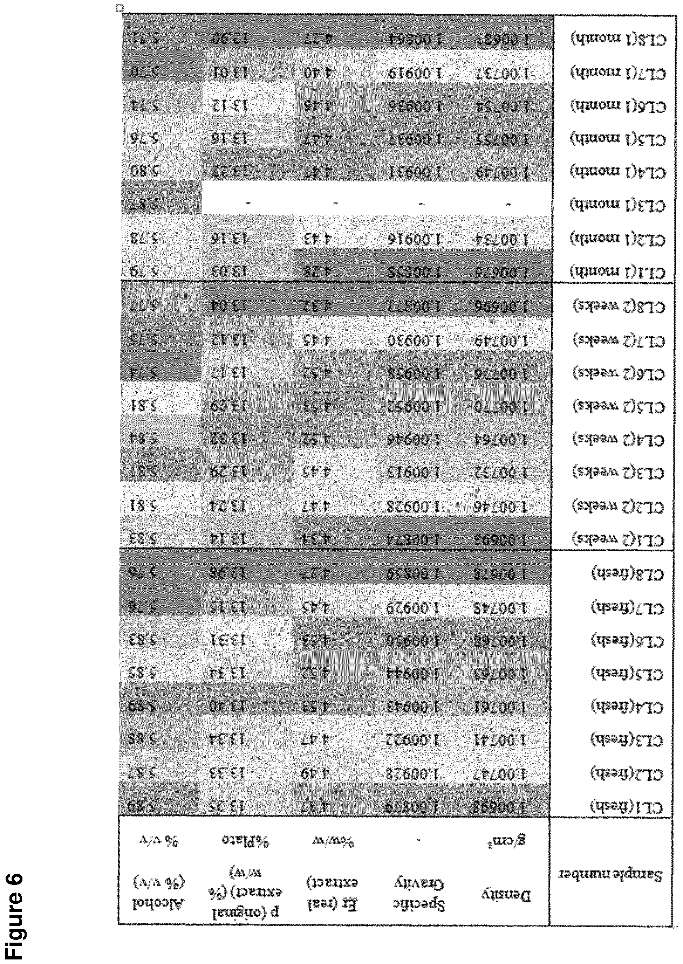

**Figure 6** shows AntonPaar data of KU Leuven beers.
   Beers were analyzed at different time points, i.e. fresh, after 2 weeks, and after 1 month of ageing. Parameters such as the density, specific gravity, sugar content, carbohydrate content, and alcohol content of the different beers were analyzed. All beers show normal characteristics of the measured parameters when compared to blank measurements. Therefore, a beer having normal density, specific gravity, sugar content, carbohydrate content, and alcohol content, can be brewed upon addition of a stabilizing agent such as ellagic acid.

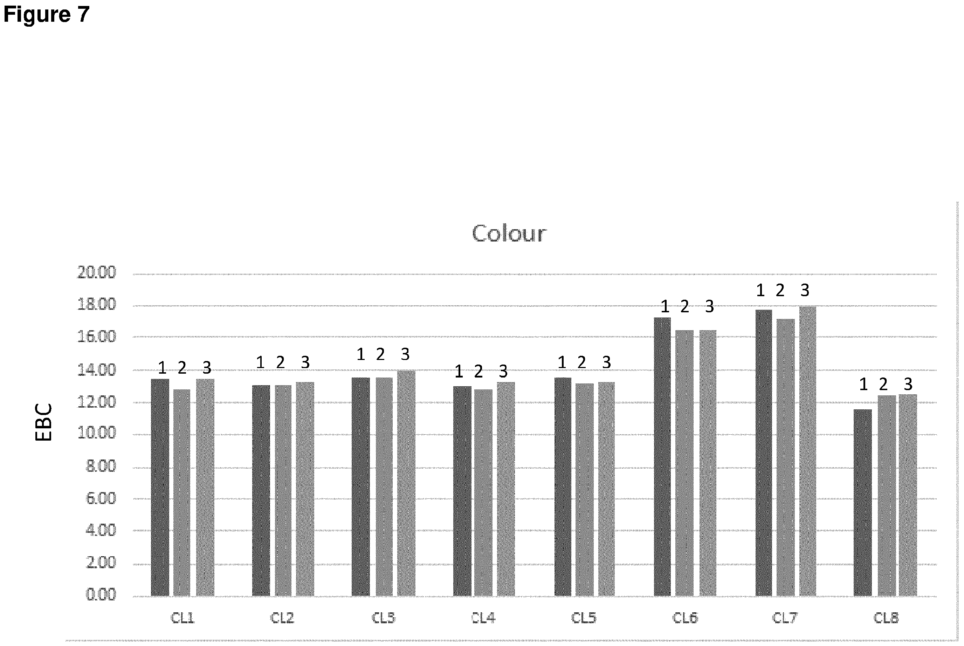

**Figure 7** shows beer colors of various beers (*blue (*="*1*"*)*: fresh; *orange (*=*"2"):* two weeks aged: *grey (="3"):* one month aged). A higher EBC (European Brewery Convention) corresponds to a higher beer color.
   The following beers are depicted:
   - CL1 & CL5: blanks (no additions)
   - CL2: 75 mg/L ellagic acid (added at the begin of mashing)
   - CL3: 75 mg/L green tea extract (added at the begin of mashing)
   - CL4: 75 mg/L tannic acid (added at the begin of mashing)
   - CL6: 75 mg/L ellagic acid (added at the end of mashing)
   - CL7: 75 mg/L green tea extract (added at the end of mashing)
   - CL8: 75 mg/L tannic acid (added at the end of mashing)
   All beers showed comparable beer color properties. The color of the beer remained relatively constant upon addition of a stabilizing agent even after one month of aging. Particularly, when added at the beginning of mashing, the addition of ellagic acid provided a beer with high color stability over at least four weeks.

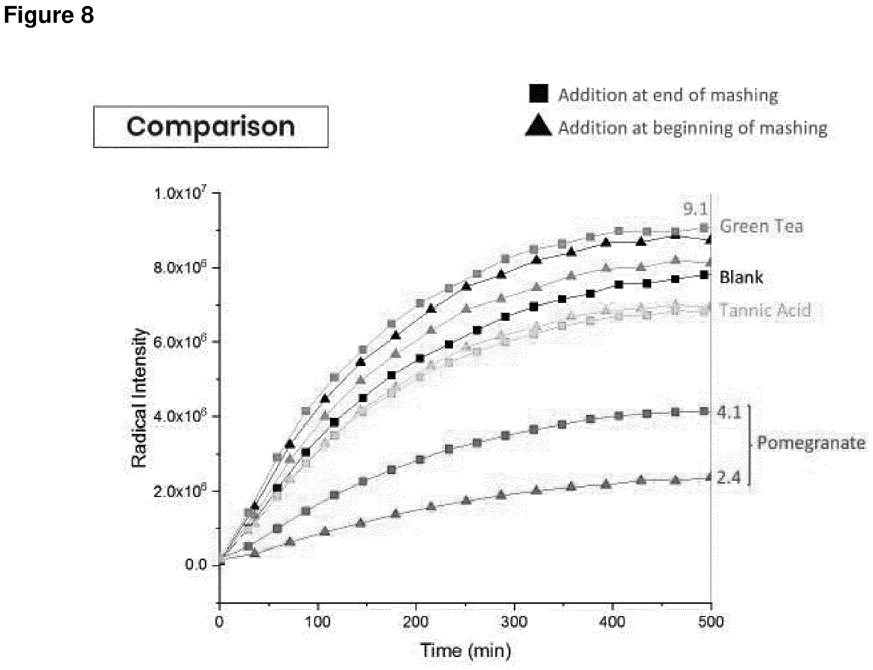

**Figure 8** shows the influence of various added components on radical intensity observed during ESR measurement.
   Lower radical intensity values indicate a more oxidation-resistant wort. Pomegranate extract, i.e. a natural extract used in a method of the present invention comprising and/or consisting of ellagic acid, achieves the lowest radical intensity of the tested compounds. Thus, ellagic acid effectively decreases radical intensity and increases oxidation-resistance of a wort.

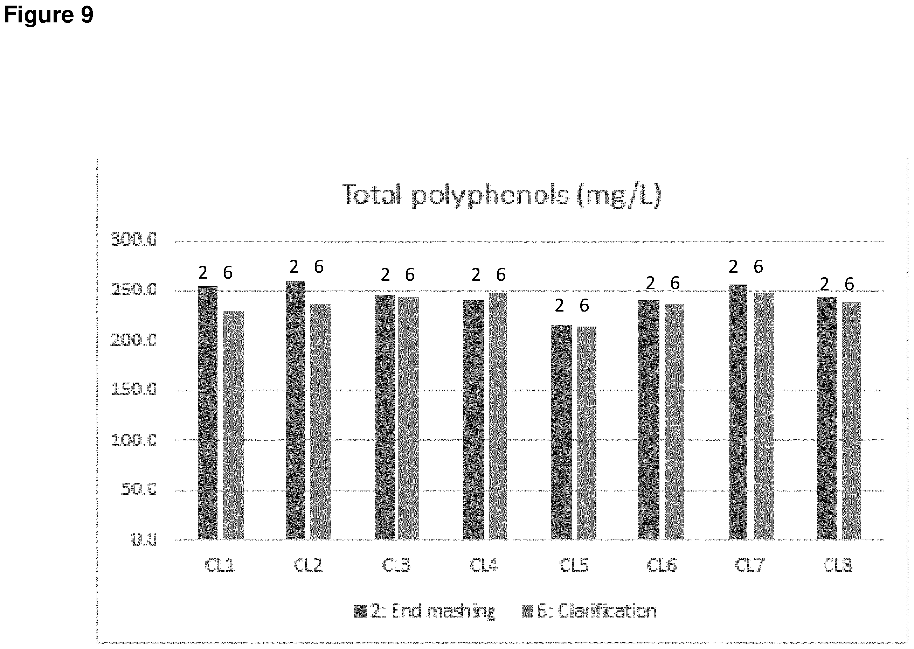

**Figure 9** shows the total polyphenol levels of the different worts.
   Two sampling stages of worts were analyzed; at the end of mashing and after whirlpooling/clarification. Similar total polyphenol levels were observed for the various brews.
   - CL1 & CL5: blanks (no additions)
   - CL2: 75 mg/L ellagic acid (added at the begin of mashing)
   - CL3: 75 mg/L green tea extract (added at the begin of mashing)
   - CL4: 75 mg/L tannic acid (added at the begin of mashing)
   - CL6: 75 mg/L ellagic acid (added at the end of mashing)
   - CL7: 75 mg/L green tea extract (added at the end of mashing)
   - CL8: 75 mg/L tannic acid (added at the end of mashing).

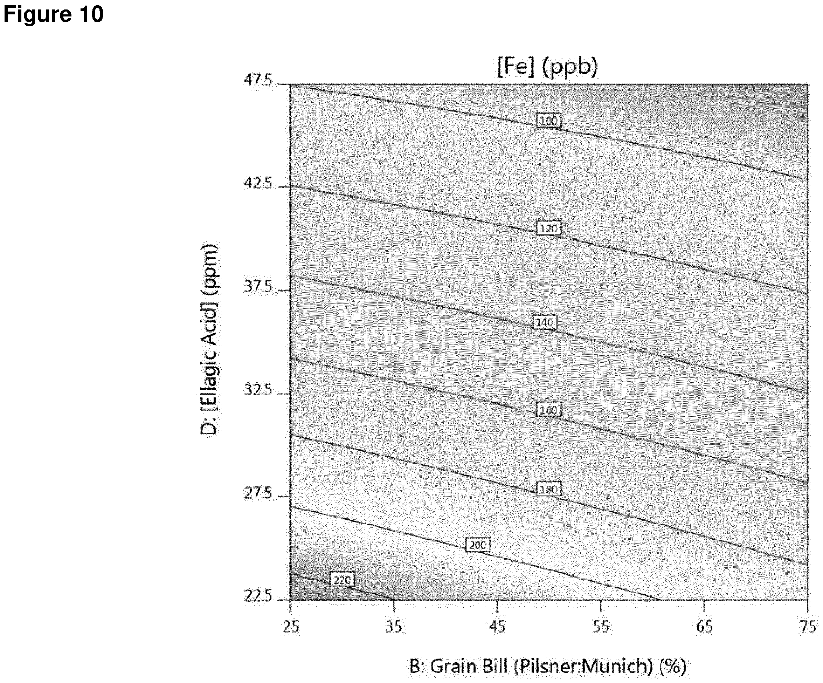

**Figure 10** shows Fe-levels (black, diagonal lines) in wort and their variation in relation to the added ellagic acid concentration (y-axis) and the grain bill (x-axis).
   The left part of the diagram are worts with a high amount of Munich malt (up to 75%), the right side of the diagram are worts with a high amount of Pilsner malt (also up to 75%). Munich malt is slightly roasted and thus releases higher amounts of transition metals such as iron into the wort than Pilsner malt. When the concentration of added ellagic acid is "low", e.g. 22.5 mg/L of ellagic acid (bottom part of the diagram), the iron concentration is 21% higher when using high amounts of Munich malt, e.g. 75 % Munich malt, than when using high amounts of Pilsner malt, e.g. 75 % Pilsner malt. However, when the added ellagic acid concentration is "high", e.g. 47.5 mg/L of ellagic acid, the difference in iron concentration when using 75% Munich malt and 75% Pilsner malt, respectively, is only 16%.

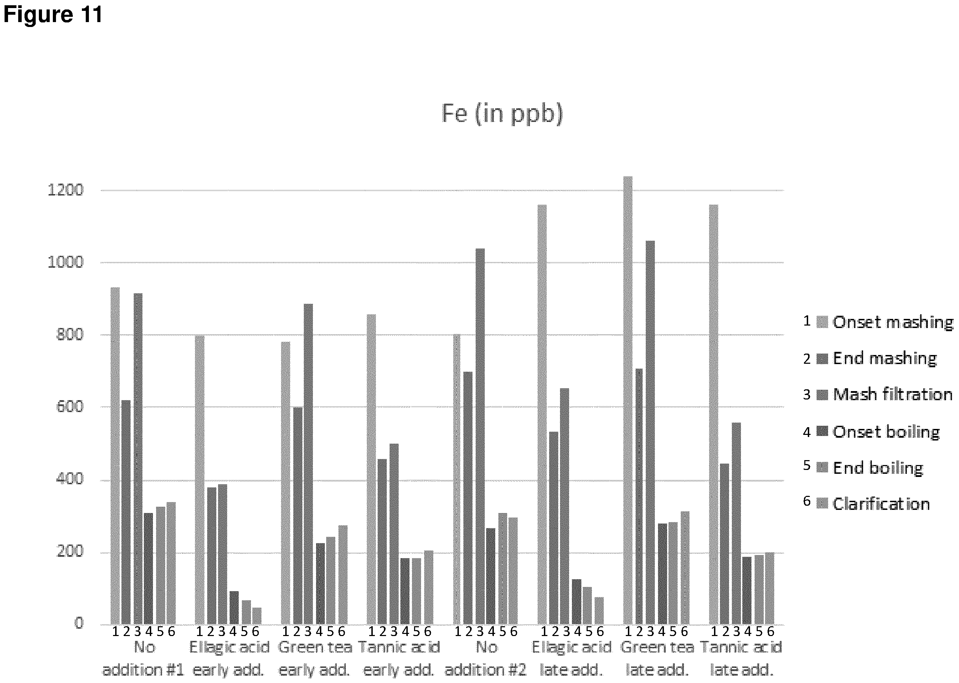

**Figure 11** shows iron concentrations in eight different brews.
   Wort results are shown, i.e. from the beginning of mashing until the finished pitching wort. Samples of every brew were taken at six stages during mashing; 1. onset of mashing, 2. end of mashing, 3. at mash filtration, 4. at the onset of boiling, 5. at the end of boiling, and 6. at clarification. It is observed that ellagic acid is the most effective agent in decreasing the iron content during the wort production process. Tannic acid is second best in iron content decreasing effectiveness. Green tea has only a small effect. The first brew and the fifth brew are blank brews (no chelator addition). In the first four brews, the chelators were added at the onset of mashing. In the last four brews, the chelators were added at the end of mashing. Chelators were added at a concentration of 75 mg/L.

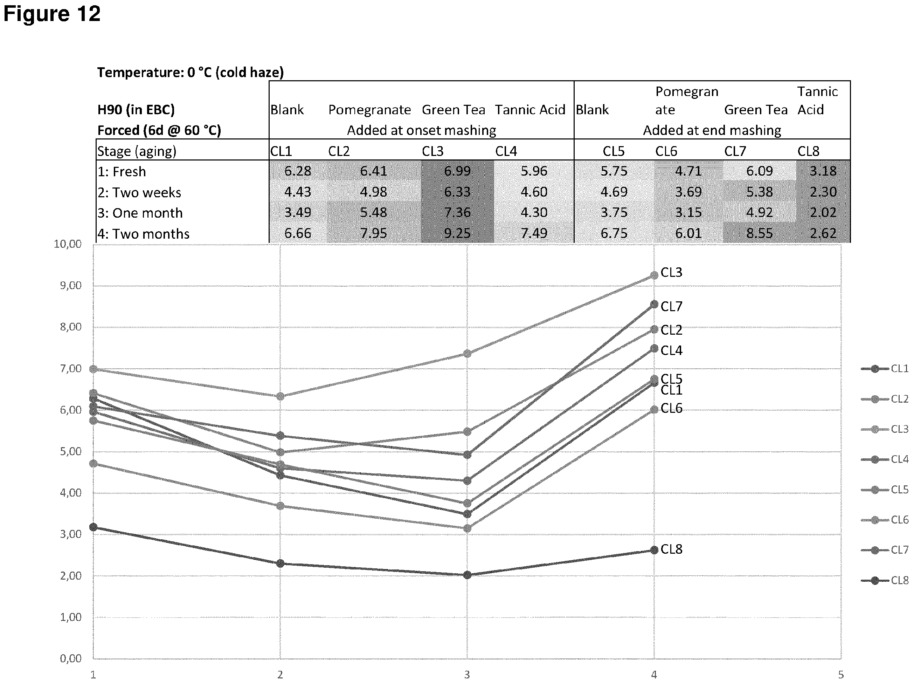

**Figure 12** shows that a stabilizing agent provides colloidal stability of a wort and/or beer.

Haze formation over time was determined. For example, haze formation was measured at room temperature and/or at about 0 °C after forced and/or unforced aging. Samples CLi-CL8 were measured freshly, after two weeks, after one month, and after two months. An increased colloidal stability was observed upon addition of a stabilizing agent according to the present invention. The representative figure shows cold haze formation at 0 °C in samples CL1-CL8 at four time points after production, particularly at time points "fresh" (1), two weeks (2), one month (3), and two months (4).

In the following, reference is made to the examples, which are given to illustrate, not to limit the present invention.

### EXAMPLES

### Example 1: Assessment of the antioxidant capacity of wort and/or beer.

The antioxidant capacity of wort and/or beer was assessed using electron spin resonance (ESR) spectroscopy. The samples were heated to a temperature of about 60 °C causing the samples to generate radicals, and the amount of radicals generated over time was measured. Optionally, a spin-trap agent was used to stabilize radicals during the measurements. A higher oxidative flavor stability is indicated by a lower amount of radicals generated during heating which is indicated by a lower intensity in ESR spectroscopy. Punicalagin, having a content of 90% ellagic acid, was added to a wort, such as at the beginning of mashing, at a lower concentration of 10 mg/L and at a higher concentration of 60 mg/L. The addition of punicalagin reduced the intensity measured in ESR spectroscopy, and thus increased oxidative flavor stability of the wort. The higher concentration of punicalagin was more efficient in lowering the intensity, and thus in increasing oxidative flavor stability, than the lower concentration of punicalagin (Figure 2).

### Example 2: Ellagic acid effectively chelates the pro-oxidative transition metal iron.

Different concentrations of ellagic acid were added to unboiled wort during the mashing process, namely 0 mg/L, 10 mg/L, 20 mg/L, 60 mg/L, and 120 mg/L ellagic acid. Furthermore, tannic acid was used as a control. The metal contents of Fe, Cu, and Mn were analyzed using inductively coupled plasma optical emission spectroscopy (ICP-OES). The contents of manganese and copper were not significantly changed by increasing concentrations of ellagic acid. However, increasing concentrations of ellagic acid showed effective chelation of iron in the wort. The chelation of transition metals using ellagic acid was more efficient than the chelation of transition metals using tannic acid (Figure 3).

### Example 3: Pomegranate extract effectively chelates the pro-oxidative transition metal iron.

Several natural extracts were added during mashing and the content of iron in unboiled wort upon addition of different concentrations of these extracts was analyzed. Four different natural extracts were compared, namely grapefruit extract, green tea extract, raspberry extract, and pomegranate extract. Grapefruit extract and raspberry extract did not show a significant reduction of the iron content. Green tea extract showed a reduction of the iron content, however the reduction was smaller than the reduction of iron using pomegranate extract. Pomegranate extract, having an ellagic acid purity of 40%, effectively decreased the iron content in the wort (Figure 4). Pomegranate extract showed the highest efficiency with regard to chelating iron compared to the other tested natural extracts.

### Example 4: Ellagic acid effectively chelates transition metals in various concentrations and purities.

Various concentrations of ellagic acid, and two purities of ellagic acid, namely having a purity of 40 % or 90 %, were added to wort, such as at the beginning of mashing. The contents of transition metals Fe, Cu, and Mn in the wort were analyzed using ICP-OES. The levels of copper and manganese were not significantly changed by any of the concentrations and/or purities of ellagic acid. In contrast thereto, iron was effectively chelated by ellagic acid in various concentrations and in both purities (Figure 5). A concentration of about 60 mg/L is highly efficient with regard to the amount of compound needed to evoke the iron reducing effect and the respective effect evoked.

### Example 5: Analysis of aging of different beers.

Eight KU Leuven beers (samples CL1-CL8) were analyzed at three different time points, namely directly after brewing ("fresh"), after two weeks, and after one month of aging, using AntonPaar analysis. Two beers were blank beers which did not contain a stabilizing agent of the present invention (CL1 and CL5); CL2 contained 75 mg/L ellagic acid which was added at the begin of mashing; CL3 contained 75 mg/L green tea extract which was added at the begin of mashing; CL4 contained 75 mg/L tannic acid which was added at the begin of mashing; CL6 contained 75 mg/L ellagic acid which was added at the end of mashing; CL7 contained 75 mg/L green tea extract which was added at the end of mashing; and CL8 contained 75 mg/L tannic acid which was added at the end of mashing.

Furthermore, the color of these beers at the three time points (fresh, two weeks aged, one month aged) was analyzed. The color of the beer remained relatively constant upon addition of a stabilizing agent even after one month of aging (Figure 7).

### Example 6: Ellagic acid effectively decreases radical intensity when added at different time points during the brewing process.

Green tea extract, tannic acid, and pomegranate extract comprising ellagic acid were added to a wort at the beginning of mashing or at the end of mashing. Green tea extract and tannic acid did not significantly decrease the radical intensity measured in ESR spectroscopy. In contrast thereto, ellagic acid effectively decreased radical intensity both when added at the beginning of mashing or when added at the end of mashing. Ellagic acid can thus be added at different steps during the brewing process to obtain a wort and/or beverage with higher oxidation resistance.

### Example 7: Ellagic acid increases colloidal stability.

A stabilizing agent of the present invention reduced haze formation over time (Figure 12) and thus showed a colloidal stability enhancing effect.

### Example 8: Ellagic acid effectively chelates transition metals in worts comprising malt with high transition metal contents.

Worts with different types of malts, such as Munich malt and Pilsner malt, were analyzed, particularly a 100% Munich wort and a 100% Pilsner wort, using ICP-OES analysis. Due to the grain composition, Munich worts have much higher transition metal contents, particularly iron contents, than Pilsner worts. For example, a Munich wort may have an iron concentration of about 300 µg/L and a Pilsner wort may have an iron concentration of about 180 µg/L. It was observed that, both in worts having a higher iron content and in worts having a lower iron content, it was possible to effectively chelate iron. Particularly, higher amounts of stabilizing agent allowed to counterbalance higher amounts of transition metal present in the wort (Figure 10). Therefore, when using worts comprising sugar-containing raw materials with higher transition metal content, higher amounts of stabilizing agent should be used, such as a concentration of at least 40 mg/L.

### Example 9: Effect of the time point of the addition of the stabilizing agent during the brewing process.

It was assessed whether the time point of the addition of the stabilizing agent has an influence of the chelating efficiency of the stabilizing agent. Eight different brews were analyzed. In four brews, 75 mg/L of a stabilizing agent were added at the onset of mashing ("early addition"), and in another four brews, 75 mg/L of a stabilizing agent were added at the end of mashing ("late addition"). There was one control brew without addition of a stabilizing agent, one brew with an addition of ellagic acid, one brew with an addition of green tea extract, and one brew with an addition of tannic acid, in each of the "early addition" group and the "late addition" group. In each brew, a sample for analyzing the transition metal content was taken at the onset of mashing, at the end of mashing, at mash filtration, at the onset of boiling, at the end of boiling, and at clarification. It was observed that ellagic acid is effective in reducing the iron content during the brewing process, and is effective both when added at the onset of mashing or at the end of mashing. Ellagic acid showed a superior reducing iron effect compared to green tea extract and tannic acid. The iron reducing effect was slightly higher when ellagic acid was added at the onset of mashing compared to when ellagic acid was added at the end of mashing. In contrast to green tea extract and tannic acid, ellagic acid chelates iron even during the boiling step (Figure 11).

The project leading to this application has received funding from the European Union's Horizon 2020 research and innovation programme under the Marie Sklodowska-Curie grant agreement No 722166.

### REFERENCES

[1] Ting, P., Lusk, L., Refling, J., Kay, S., and Ryder, D. (2008) Identification of antiradical hop compounds. J. Am. Soc. Brew. Chem. 66(2), 116-126.
[2] Wietstock, P. Kunz, T., Shellhammer, T., Schön T., and Methner, F.-J. (2010) Behavior of antioxidants derived from hops during wort boiling. J. Inst. Brew. 116(2), 157-166.
[3] Wietstock, P. and Shellhammer, T. (2011) Chelating properties and hydroxyl-scavenging activities of hop-α and iso-α-acids, J. Am. Soc. Brew. Chem. 69(3), 133-138.
[4] Lermusieau, G., Liegeois, C., and Collin, S. (2001) Reducing power of hop cultivars and beer ageing. Food Chem. 72(4), 413-418.
[5] Liu, Y., Gu, X. ,Tang, J., and Liu, K. (2007) Antioxidant activities of hops (Humulus lupulus) and their products. J. Am. Soc. Brew. Chem. 65(2), 116- 121.
[6] Mikyska, A., Hrabak, M., Haskova, D., and Srogi, J. (2002) The role of malt and hop polyphenols in beer quality, flavour and haze stability. J. Inst. Brew. 108(1), 78-85.
[7] Wietstock, P., Kunz, T. Pereira, F. Methner F.-J. (2016) Metal chelation behaviour of hop acid in buffered model systems. Vol. 69, 56-63.
[8] Kunz,T.; Strähmel, A.; Cortes, N.; Kroh, L.W.; Methner, F.J.; Influence of Intermediate Maillard Reaction Products with Endiol Structure on the Oxidative Stability of Beverages. American Society of Brewing Chemists, 71, 2013, p.114-123.
[9] Aerts, G.; De Cooman, L.; DeRouck, G. Penzes, Z.; De Buck, A.; Musche, R.; Van Wasberghe, J; (2004) evaluation of the Additiion of Gallotannnins to the Brewing Liquor for the improvement of the Flavor Stability of Beer. Technical quarterly - Master Brewers Association of the Americas 41 (3), 298-304.
[10] Reinhardt, C.; Kunz, T.; Methner, F.-J. (2013) Gallotannins - A usefull tool to improve colloidal and oxidative beer stability, in Master Brewers Association of Amerika, annual meeting, Austin, Texas, Poster-presentation.
[11] Kunz, T.; Müller,C.; Methner, F.J.; EAP Determination and Beverage Antioxidative IndeX(BAX)-Advantageous tools for Evaluation of the oxidative flavor stability of beer and beverages. In: Brewing Science,65, Jan/Feb 2012, p.12-22.

The features of the present invention disclosed in the specification, the claims, and/or in the accompanying figures may, both separately and in any combination thereof, be material for realizing the invention in various forms thereof.

## Claims

1. A method for producing a beverage, preferably a fermented beverage with improved oxidative and colloidal stability, comprising the following steps:
(i) providing a sugar-containing raw material,
(ii) mashing the sugar-containing raw material to obtain a wort,
(iii) lautering and boiling of the wort,
(iv) optionally, whirlpool rest of the wort,
(v) fermenting the wort by using a yeast,
(vi) obtaining a beverage,
(vii) optionally, maturation of the beverage,
(viii) optionally, filtration of the beverage,
wherein said method further comprises adding a stabilizing agent before, during, or after any of steps (ii), (iii), (iv), (v), (vi), (vii), and/or (viii),
wherein said stabilizing agent comprises and/or consists of ellagic acid.

2. The method of claim 1, wherein said sugar-containing raw material is any of malt, barley, maize, rice, wheat, oat, rye, sorghum, triticale, fonio, and millet, preferably is malt.

3. The method of claim 1 or 2, wherein said stabilizing agent is any of a natural extract comprising ellagitannin and/or ellagic acid, such as pomegranate extract, an ellagitannin, such as punicalagin, a hydrolysis product thereof, ellagic acid, and/or combinations thereof.

4. The method of any of the foregoing claims, wherein said stabilizing agent is added in step (ii) before, during, or after mashing, preferably is added before or during onset of mashing.

5. The method of any of the foregoing claims, wherein said stabilizing agent is added in step (iii) before, during, or after said boiling of the wort, preferably is added before or during said boiling of the wort, and/or
wherein said stabilizing agent is added in step (iv) before, during, or after said whirlpool rest, preferably is added before or during said whirlpool rest, and/or
wherein said stabilizing agent is added in step (v) before or during fermentation, preferably is added before fermentation, and/or
wherein said stabilizing agent is added in step (vii) before, during, or after maturation, preferably is added before maturation, and/or
wherein said stabilizing agent is added in step (viii) before or during filtration.

6. The method of any of the foregoing claims, wherein said stabilizing agent is added more than once in any of steps (ii)-(viii) and/or is added in more than one of steps (ii)-(viii).

7. The method of any of the foregoing claims, wherein said stabilizing agent is added in the form of a solid, such as in the form of a powder, pressed powder, capsule, pill, granules, or tablet, and/or is in the form of a liquid, such as in the form of a suspension, emulsion, or solution.

8. The method of any of the foregoing claims, wherein said stabilizing agent is added at a concentration in the range of from 0.01 to 250 mg/L, preferably in the range of from 0.01 to 100 mg/L.

9. The method of any of the foregoing claims, wherein said natural extract comprises punicalagin, and/or wherein said ellagitannin is punicalagin.

10. The method of any of the foregoing claims, wherein said stabilizing agent has an ellagic acid content of at least 10 wt%, preferably at least 40 wt%, more preferably at least 90 wt%.

11. The method of any of the foregoing claims, wherein said stabilizing agent is a natural extract having a purity of ellagitannin and/or ellagic acid of at least 40 %, preferably at least 90 %, and/or
wherein said stabilizing agent is ellagitannin having a purity of at least 40 %, preferably at least 90 %, and/or
wherein said stabilizing agent is one or several hydrolysis products obtained from ellagitannin having a purity of at least 40 %, preferably at least 90 %, and/or
wherein said stabilizing agent is ellagic acid having a purity of at least 40 %, preferably at least 90 %.

12. The method of any of the foregoing claims, wherein said malt comprises Pilsner malt, Munich malt, and/or an other special malt type, such as a color malt, a flavor malt, a caramel malt, a roast malt, and a melanoidine malt.

13. The method of any of the foregoing claims, wherein said stabilizing agent binds to, preferably chelates, a pro-oxidative acting transition metal in said wort and/or beverage.

14. The method of any of the foregoing claims, wherein said pro-oxidative acting transition metal is any of iron, manganese, and copper, preferably is iron.

15. The method of any of the foregoing claims, wherein said stabilizing agent reduces a radical intensity in said wort, as measured by electron spin resonance spectroscopy and/or chemiluminescence.

16. A beverage produced by a method of any of claims 1-15, wherein said beverage is preferably a fermented beverage, such as a beer, a beer-based beverage, and/or a wine.

17. A beverage having increased stability, preferably increased oxidative flavor stability and colloidal stability, wherein said beverage comprises any of a natural extract comprising ellagitannin and/or ellagic acid, such as pomegranate extract, an ellagitannin, such as punicalagin, a hydrolysis product thereof, ellagic acid, and/or combinations thereof, wherein said beverage is preferably a beer.

18. Use of a stabilizing agent for preparing a beverage having increased stability, preferably increased oxidative flavor stability and colloidal stability, wherein said stabilizing agent is any of a natural extract comprising ellagitannin and/or ellagic acid, such as pomegranate extract, an ellagitannin, such as punicalagin, a hydrolysis product thereof, ellagic acid, and/or combinations thereof, wherein said beverage is preferably a beer.

19. The use according to claim 18, wherein said natural extract comprises punicalagin, and/or wherein said ellagitannin is punicalagin.
